# EUROPÄISCHE PATENTANMELDUNG

(11) **EP 4 725 627 A1**
(43) Veröffentlichungstag der Anmeldung: **15.04.2026**
(21) Anmeldenummer: 25206895.2
(22) Anmeldetag: 06.10.2025
(51) Int. Cl.: B23B 3/26, B23B 29/034

(54) **KONTURDREHKOPF MIT EINEM PLANSCHIEBER**

(30) Priorität: 07.10.2024 DE 102024003266
(71) Anmelder: NSH TECHNOLOGY GmbH, 09117 Chemnitz (DE)
(72) Erfinder: PILZ, Daniel, 09117 Chemnitz (DE)
(74) Vertreter: Findeisen Neumann Scheit Partnerschaft mbB

(57) **Zusammenfassung**

Die Erfindung betrifft einen Konturdrehkopf mit einem Planschieber zur Verwendung in einer zumindest eine Arbeitsspindel aufweisenden Werkzeugmaschine. Aufgabe der Erfindung ist es, eine technische Lösung für einen in die Werkzeugspindel integrierbaren exzenterbetätigten Plandrehschieber vorzuschlagen, der eine Verstelleinrichtung aufweist, die über den gesamten Stellbereich konstante Span- und Freiflächenwinkel ermöglicht. Diese Aufgabe wird gelöst, indem die Verstelleinrichtung ein zentrisch zur Spindeldrehachse (1) angeordnetes Gehäuse (8) aufweist und in dem Gehäuse (8) zwei ineinander und zueinander drehbeweglich angeordnete Stellexzenter (9, 11) angeordnet sind, wobei der äußere Stellexzenter (9) zentrisch zur Spindeldrehachse (1) angeordnet ist, und wobei der innere Stellexzenter (11) mit einer Exzentrizität E1 im äußeren Stellexzenter (9) gelagert ist, wobei das Werkzeugspannergehäuse (14) mit einer Exzentrizität E2 im inneren Stellexzenter (11) gelagert ist, wobei der Werkzeugspanneinsatz (4) mit einer Exzentrizität E3 im Werkzeugspannergehäuse (14) gelagert ist, und wobei der Werkzeugspanneinsatz (4) zumindest eine Führungsleiste (17) zur translatorischen Führung des Werkzeugspannergehäuses (14) aufweist.

## Beschreibung

Die Erfindung betrifft einen Konturdrehkopf mit einem Planschieber, wobei der Planschieber einen zentrisch zu einer Spindeldrehachse angeordneten Spindelflansch zum Anschluss an eine Arbeitsspindel einer Werkzeugmaschine aufweist, und wobei der Konturdrehkopf einen zentrisch zur Spindeldrehachse angeordneten Werkzeugspanneinsatz mit einem Werkzeugspannergehäuse und einem zentrisch zu einer Werkzeugspannermittellängsachse angeordneten Werkzeugspanner aufweist, wobei die Werkzeugspannermittellängsachse parallel zur Spindeldrehachse angeordnet ist, und wobei der Werkzeugspanner durch eine Betätigung einer Verstelleinrichtung um den Betrag einer Auslenkung radial zur Spindeldrehachse verschiebbar ist.

Zur stufenlosen Verstellung der Werkzeughalterung an einer Werkzeugmaschine, beispielsweise einer Drehmaschine, sind Plandrehköpfe mit sogenannten Plandrehschiebern, auch kurz Planschieber genannt, bekannt, die über entsprechende Adapter mit der Werkzeugmaschine verbunden werden können. Diese Plandrehschieber weisen einen translatorisch bewegten Schlitten auf, über den das Werkzeug auf das Werkstück zu bewegbar ist, so dass eine Durchmesseränderung der Schneide erfolgen kann. Werkstückachse und Werkzeugspindelachse stehen dabei kollinear zueinander. Die Durchmesseränderung während der Vorschubbewegung einer Spindel in Rotationsachsrichtung erfolgt mit diesen Verstellmechanismus im Schnitt, also während des Bearbeitungsprozesses.

Aus dem Stand der Technik sind verschiedene Ausführungsformen von Plandrehschiebern bekannt. So beschreibt EP 0 804 984 A1 ein Planschieberwerkzeug, bei dem die Schneide mittels eines axial verschiebbaren Schiebers auf unterschiedliche Arbeitsdurchmesser eingestellt werden kann. In der jeweiligen Position wird der Schieber mit Hilfe einer Keilfläche verklemmt, die an einer auf einer Schraube sitzenden Hülse vorgesehen ist. Ist eine Verstellung der Schneide erforderlich, wird die Schraube zurückgedreht, so dass anschließend der Schieber mit einer weiteren Schraube verschoben werden kann, um die Schneide auf den gewünschten Arbeitsdurchmesser zu verstellen. Anschließend wird der Schieber mit Hilfe des Verstellelementes und der Keilfläche in der neuen Lage verklemmt. Da die Verstellung der Schneide mechanisch vorgenommen wird, gestaltet sich die Bearbeitung eines Werkstückes mit dem Planschieberwerkzeug umständlich und aufwändig.

DE 10 2014 019 175 B4 schlägt ein Planschieberwerkzeug vor, bei dem eine von einem Klemmelement erzeugte Klemmkraft quer zur Verschieberichtung des Schiebers wirkt, und bei dem das Klemmelement weiterhin mittels eines Druckmediums gegen den Schieber klemmbar ist. Die Druckbeaufschlagung des Klemmelementes kann programmgesteuert erfolgen, so dass die Schneidenverstellung auch vollautomatisch während eines Bearbeitungsprozesses erfolgen kann.

In der Praxis durchgesetzt haben sich in die Werkzeugspindel integrierbare exzenterbetätigte Plandrehschieber. Die Vorteile der Exzenterverstellung liegen vor allem in der hohen Positioniergenauigkeit und einer geringen Unwucht der Stellmechanik.

Nachteilig an allen aus dem Stand der Technik bekannten sowie am Markt erhältlichen Lösungen ist die mit der Verstellung des Plandrehschiebers verbundene Winkeländerung sowohl der Freifläche als auch der Spanfläche an der Schneide des Drehwerkzeuges, was dazu führt, dass Freifläche und Spanfläche beziehungsweise Freiwinkel und Spanwinkel über den Stellbereich nicht konstant sind. Dies wiederum führt zu ebenfalls inkonstanten Spanbildungsbedingungen, unter anderem hinsichtlich des Spanflusses, der Schnittkräfte und der Oberflächenqualität am Werkstück.

Aufgabe der Erfindung ist es deshalb, eine technische Lösung für einen in die Werkzeugspindel integrierbaren exzenterbetätigten Plandrehschieber zu schaffen, der eine Verstelleinrichtung aufweist, die über den gesamten Stellbereich konstante Span- und Freiflächenwinkel ermöglicht.

Diese Aufgabe wird gelöst, indem die Verstelleinrichtung ein zentrisch zur Spindeldrehachse angeordnetes Gehäuse aufweist und in dem Gehäuse zwei ineinander und zueinander drehbeweglich angeordnete Stellexzenter angeordnet sind, wobei der äußere Stellexzenter zentrisch zur Spindeldrehachse angeordnet ist, und wobei der innere Stellexzenter mit einer Exzentrizität E1 im äußeren Stellexzenter gelagert ist, wobei das Werkzeugspannergehäuse mit einer Exzentrizität E2 im inneren Stellexzenter gelagert ist, wobei der Werkzeugspanneinsatz mit einer Exzentrizität E3 im Werkzeugspannergehäuse gelagert ist, und wobei der Werkzeugspanneinsatz zumindest eine Führungsleiste zur linearen Führung des Werkzeugspannergehäuses aufweist.

Die Vorteile der Exzenterverstellung, insbesondere eine hohe Positioniergenauigkeit und geringe Unwucht der Stellmechanik, werden ergänzt durch die mit der vorgeschlagenen Lösung erreichbare Konstanthaltung der Winkel von Freifläche und Spanfläche an der Schneide des Zerspanungswerkzeugs. Dadurch, dass das Werkzeugspannergehäuse mit den Führungsleisten zum Werkzeugspanneinsatz an einer Verdrehbewegung gehindert wird, wird beim Verdrehen des äußeren Stellexzenters eine translatorische Bewegung des Werkzeugspanneinsatzes ohne Verdrehung des Werkzeuges erreicht.

Eine weitere Ausgestaltung sieht vor, dass zumindest an einem der Stellexzenter zumindest ein Stellantrieb angeordnet ist. Die im Gehäuse der Verstelleinrichtung angeordneten Elemente bilden eine mechanische Baugruppe, die eine Rotationsbewegung am Stellexzenter in eine hochgenaue translatorische Stellbewegung am Werkzeugspanneinsatz umwandelt. Der Stellantrieb für die Antriebsseite der Stellexzenter wird kollinear zur Spindeldrehachse am Gehäuse der Verstelleinrichtung befestigt. Als Antrieb wird üblicherweise eine Motor-Getriebe-Kombination mit großer Übersetzung verwendet.

Eine weitere Ausgestaltung sieht vor, dass die Stellexzenter eine vordere Lagerung und eine hintere Lagerung aufweisen. Im Gehäuse der Verstelleinrichtung befinden sich zwei Stellexzenter, die ineinander angeordnet sind und durch eine Rotationsbewegung an der Antriebsseite der Stellexzenter eine translatorische Bewegung des Werkzeugspanneinsatzes, der in einem gegen Verdrehen gesicherten Werkzeugspannergehäuse befestigt ist, erzeugen. Die Stellexzenter sind mit einer vorderen Lagerung und einer hinteren Lagerung radial und axial spielfrei gelagert.

Eine vorteilhafte Ausgestaltung sieht vor, dass das Gehäuse der Verstelleinrichtung zur wechselbaren Aufnahme an einer Werkzeugspindel ausgestaltet ist. Eine solche Ausgestaltung kann entweder für eine feste Montage, beispielsweise über Flansche, oder passgenau zu einer Werkzeugschnittstelle beziehungsweise Werkzeugaufnahme ausgeführt sein.

Eine weitere vorteilhafte Ausgestaltung des erfindungsgemäßen Konturdrehkopfes sieht vor, dass das Gehäuse der Verstelleinrichtung für eine Montage in einer Hohlspindel ausgestaltet ist. Eine solche Ausgestaltung ermöglicht den Einsatz als Ausdrehkopf für die Innenbearbeitung von Hohlwellen beziehungsweise zylinderförmigen Innenflächen. Darüber hinaus ist die Vorrichtung für die Anwendung des Polygondrehens für Wellen- und Nabenpolygone geeignet.

Eine vorteilhafte Ausführung des erfindungsgemäßen Konturdrehkopfes sieht vor, dass Fluide bis zum eingesetzten Bearbeitungswerkzeug durch den Konturdrehkopf hindurchgeführt werden können. Dies kann beispielsweise dadurch erfolgen, dass ein Fluidkanal in das Planschieberwerkzeug integriert ist.

Nachfolgend wird das erfindungsgemäße Planschieberwerkzeug anhand der Zeichnungen erläutert. Dabei zeigen
**Fig. 1** und **Fig. 2** ein Ausführungsbeispiel des Planschieberwerkzeugs in zwei unterschiedlichen Stellungen,
**Fig. 3** eine Schnittdarstellung der Verstelleinrichtung,
**Fig. 4** eine Ansicht des Planschieberwerkzeugs von der Rückseite,
**Fig. 5** eine teilweise Schnittdarstellung des Planschieberwerkzeuges mit einem Fluidkanal und
**Fig. 6** eine Darstellung der Exzentrizitäten.

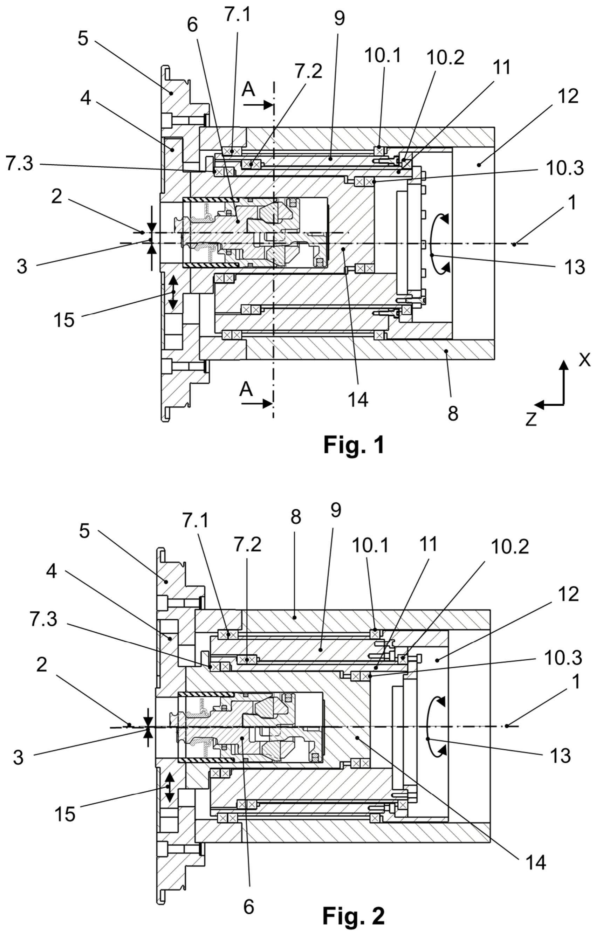

In **Fig. 1** und **Fig. 2** ist ein Ausführungsbeispiel des erfindungsgemäßen Planschieberwerkzeugs als Ausdrehkopf für die Innenbearbeitung von Hohlwellen beziehungsweise zylinderförmigen Innenflächen dargestellt. Das Planschieberwerkzeug wird bei Verwendung an einer Werkzeugmaschine (nicht dargestellt) mit einem Spindelflansch 5 an dieser so montiert, dass die Rotationsachse des Spindelflanschs 5 kollinear zu einer Spindeldrehachse 1 angeordnet ist. Das Planschieberwerkzeug weist einen zentrisch zur Spindeldrehachse 1 angeordneten Werkzeugspanneinsatz 4 mit einem Werkzeugspannergehäuse 14 auf. Im Inneren des Werkzeugspannergehäuses 14 ist ein Werkzeugspanner 6 zentrisch zu einer Werkzeugspannermittellängsachse 2 angeordnet, wobei die Werkzeugspannermittellängsachse 2 parallel zur Spindeldrehachse 1 verläuft. Durch Betätigen einer Verstelleinrichtung ist der Werkzeugspanner 6 um eine Auslenkung 3 in einer Auslenkrichtung 15 radial entlang der Führung zur Spindeldrehachse 1 verschiebbar.

**Fig. 1** zeigt die Verstelleinrichtung in einer Stellung, in der die Auslenkung 3 und damit der Abstand zwischen Spindeldrehachse 1 und Werkzeugspannermittellängsachse 2 größer Null (> 0) ist. **Fig. 2** zeigt hingegen die Verstelleinrichtung in einer Stellung, in der die Auslenkung 3 und damit der Abstand zwischen Spindeldrehachse 1 und Werkzeugspannermittellängsachse 2 gleich Null (= 0) ist.

Die radiale Verschiebung des Werkzeugspanners 6 wird dadurch bewirkt, dass zwei ineinander beweglich gelagerte Stellexzenter 9, 11, insbesondere ein äußerer Stellexzenter 9 und ein innerer Stellexzenter 11, exzentrisch zueinander angeordnet und in einer vorderen Lagerung 7.1, 7.2, 7.3 und einer hinteren Lagerung 10.1, 10.2, 10.3 axial und radial spielfrei gelagert sind.

Der äußere Stellexzenter ist zentrisch zur Spindeldrehachse 1 angeordnet. Das Werkzeugspannergehäuse 14 ist exzentrisch drehbar im inneren Stellexzenter 11, der Werkzeugspanneinsatz 4 wiederum exzentrisch drehbar im Werkzeugspannergehäuse 14 gelagert. Diese in einem Gehäuse 8 angeordneten Elemente der Verstelleinrichtung bilden eine mechanische Baugruppe, die eine Rotationsbewegung am Stellexzenter 9, 11 in eine hochgenaue translatorische Stellbewegung am Werkzeugspanneinsatz 4 umwandelt.

Die Betätigung der Verstelleinrichtung erfolgt über einen Stellantrieb (nicht dargestellt), bei dem es sich vorzugsweise um eine Motor-Getriebe-Kombination mit großer Übersetzung handelt, die an der der Flanschseite gegenüberliegenden Antriebsseite 12 der Stellexzenter 9, 11 angreift. Der Stellantrieb (nicht dargestellt) für die Antriebsseite 12 der Stellexzenter 9, 11 wird kollinear zur Spindeldrehachse 1 am Gehäuse der Verstelleinrichtung 8 montiert. Durch den Stellantrieb (nicht dargestellt) wird eine rotatorische Stellbewegung 13 am Stellexzenter 9, 11 bewirkt.

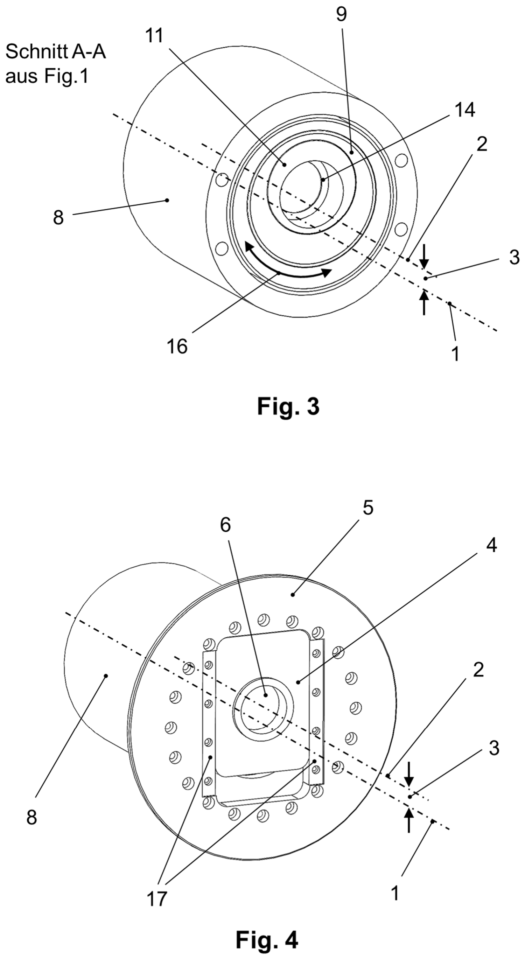

**Fig. 3** zeigt eine Schnittdarstellung der Verstelleinrichtung mit dem zentrisch zur Spindeldrehachse 1 angeordneten Gehäuse 8 im Schnitt A - A aus **Fig. 1****.** Innerhalb des Gehäuses 8 sind ineinander drehbar der äußere Stellexzenter 9, der innere Stellexzenter 11 und das Werkzeugspannergehäuse 14 angeordnet. Das Werkzeugspannergehäuse 14 ist exzentrisch so zum Gehäuse der Verstelleinrichtung 8 angeordnet, dass seine Mittellängsachse 2 mit einem Abstand beziehungsweise einer Auslenkung 3 parallel zur Spindeldrehachse 1 verläuft.

**Fig. 4** zeigt eine Ansicht des Planschieberwerkzeugs von der Rückseite, wobei das Gehäuse der Verstelleinrichtung 8, der Spindelflansch 5, der Werkzeugspanneinsatz 4 und der Werkzeugspanner 6 dargestellt sind. Der Werkzeugspanneinsatz 4 wird an zwei gegenüberliegenden Seiten jeweils durch eine Führungsleiste 17 geführt und dadurch gegen Verdrehen gesichert. Beim Verdrehen des äußeren Stellexzenters 9 wird somit eine translatorische Bewegung des Werkzeugspanneinsatzes 4 ohne Verdrehung des Werkzeuges (nicht dargestellt) um den Betrag der Auslenkung 3 erreicht. In **Fig. 4** ist zu erkennen, dass die Werkzeugspannermittellängsachse 2 parallel um den Betrag der Auslenkung 3 zur Spindeldrehachse 1 verschoben ist.

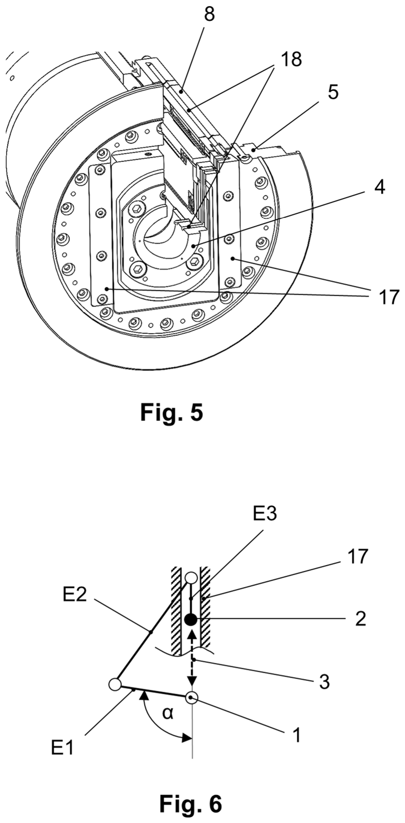

**Fig. 5** zeigt eine teilweise Schnittdarstellung des Planschieberwerkzeuges mit einem Fluidkanal 18, also einem Kanal zur Fluiddurchleitung. Ein Fluid (nicht dargestellt), beispielsweise ein Kühlschmierstoff, wird über das Gehäuse 8, durch den Spindelflansch 5 und durch eine der Führungsleisten 17 in den Werkzeugspanneinsatz 4 geleitet, in dem es so an ein Bearbeitungswerkzeug (nicht dargestellt) weitergeleitet wird, dass es an der für den Einsatzzweck optimalen Wirkstelle austreten kann.

**Fig. 6** zeigt eine Darstellung der Exzentrizitäten E1, E2 und E3, deren Überlagerung die durch die Führungsleisten 17 linear geführte Auslenkung 3 beziehungsweise die Verschiebung der Werkzeugspannermittellängsachse 2 gegenüber der Spindeldrehachse 1 bewirkt. E1 ist die Exzentrizität zwischen äußerem Stellexzenter 9 und innerem Stellexzenter 11. E2 ist die Exzentrizität zwischen innerem Stellexzenter 11 und Werkzeugspannergehäuse 14, und E3 ist die Exzentrizität zwischen Werkzeugspannergehäuse 14 und Werkzeugspanneinsatz 4. Die Veränderung der Auslenkung 3 und damit die Verschiebung der Werkzeugspannermittellängsachse 2 gegenüber der Spindeldrehachse 1 wird durch die Drehung eines Antriebsrotors (nicht dargestellt) um einen Antriebswinkel α bewirkt.

### Bezugszeichenliste

- 1: Spindeldrehachse
- 2: Werkzeugspannermittellängsachse
- 3: Auslenkung
- 4: Werkzeugspanneinsatz
- 5: Spindelflansch
- 6: Werkzeugspanner
- 7.1: erste vordere Lagerung Stellexzenter
- 7.2: zweite vordere Lagerung Stellexzenter
- 7.3: dritte vordere Lagerung Stellexzenter
- 8: Gehäuse; Gehäuse der Verstelleinrichtung
- 9: äußerer Stellexzenter
- 10.1: erste hintere Lagerung Stellexzenter
- 10.2: zweite hintere Lagerung Stellexzenter
- 10.3: dritte hintere Lagerung Stellexzenter
- 11: innerer Stellexzenter
- 12: Antriebsseite Stellexzenter
- 13: Stellbewegung am Stellexzenter
- 14: Werkzeugspannergehäuse
- 15: Auslenkrichtung des Werkzeugspanners
- 16: Bewegungsrichtung Stellexzenter
- 17: Führungsleiste
- 18: Fluidkanal
- E1: Exzentrizität des inneren Stellexzenters zum äußeren Stellexzenter
- E2: Exzentrizität des Werkzeugspannergehäuses zum inneren Stellexzenter
- E3: Exzentrizität des Werkzeugspanneinsatzes zum Werkzeugspannergehäuse
- α: Antriebswinkel des Antriebsrotors

## Patentansprüche

1. Konturdrehkopf mit einem Planschieber, wobei der Planschieber einen zentrisch zu einer Spindeldrehachse (1) angeordneten Spindelflansch (5) zum Anschluss an eine Arbeitsspindel einer Werkzeugmaschine aufweist, und wobei der Konturdrehkopf einen zentrisch zur Spindeldrehachse (1) angeordneten Werkzeugspanneinsatz (4) mit einem Werkzeugspannergehäuse (14) und einem zentrisch zu einer Werkzeugspannermittellängsachse (2) angeordneten Werkzeugspanner (6) aufweist, wobei die Werkzeugspannermittellängsachse (2) parallel zur Spindeldrehachse (1) angeordnet ist, und wobei der Werkzeugspanner (6) durch eine Betätigung einer Verstelleinrichtung um den Betrag einer Auslenkung (3) radial zur Spindeldrehachse (1) verschiebbar ist, **dadurch gekennzeichnet, dass** die Verstelleinrichtung ein zentrisch zur Spindeldrehachse (1) angeordnetes Gehäuse (8) aufweist und in dem Gehäuse (8) zwei ineinander und zueinander drehbeweglich angeordnete Stellexzenter (9, 11) angeordnet sind, wobei der äußere Stellexzenter (9) zentrisch zur Spindeldrehachse (1) angeordnet ist, und wobei der innere Stellexzenter (11) mit einer Exzentrizität E1 im äußeren Stellexzenter (9) gelagert ist, wobei das Werkzeugspannergehäuse (14) mit einer Exzentrizität E2 im inneren Stellexzenter (11) gelagert ist, wobei der Werkzeugspanneinsatz (4) mit einer Exzentrizität E3 im Werkzeugspannergehäuse (14) gelagert ist, und wobei der Werkzeugspanneinsatz (4) zumindest eine Führungsleiste (17) zur translatorischen Führung des Werkzeugspannergehäuses (14) aufweist.

2. Konturdrehkopf mit Planschieber nach Anspruch 1, **dadurch gekennzeichnet, dass** zumindest an einem der Stellexzenter (9, 11) zumindest ein Stellantrieb angeordnet ist.

3. Konturdrehkopf mit Planschieber nach Anspruch 1, **dadurch gekennzeichnet, dass** die Stellexzenter (9, 11) jeweils eine vordere Lagerung (7.1, 7.2, 7.3) und eine hintere Lagerung (10.1, 10.2, 10.3) aufweisen.

4. Konturdrehkopf mit einem Planschieber nach Anspruch 1, **dadurch gekennzeichnet, dass** das Gehäuse (8) der Verstelleinrichtung zur wechselbaren Aufnahme an einer Werkzeugspindel ausgestaltet ist.

5. Konturdrehkopf mit einem Planschieber nach Anspruch 1, **dadurch gekennzeichnet, dass** das Gehäuse (8) der Verstelleinrichtung für eine Montage in einer Hohlspindel ausgestaltet ist.

6. Konturdrehkopf mit einem Planschieber nach Anspruch 1, **dadurch gekennzeichnet, dass** der Konturdrehkopf zur Durchleitung von Fluiden bis zu einem Bearbeitungswerkzeug ausgestaltet ist.
